# EUROPEAN PATENT APPLICATION

(11) **EP 2 980 725 A1**
(43) Date of publication of application: **03.02.2016**
(21) Application number: 15165426.6
(22) Date of filing: 28.04.2015
(51) Int. Cl.: G06F 21/62

(54) **PRIVATE ANALYTICS WITH CONTROLLED INFORMATION DISCLOSURE**

(30) Priority: 28.07.2014 US 201462029790 P
(71) Applicant: Max-Planck-Gesellschaft zur Förderung der Wissenschaften e.V., 80539 München (DE)
(72) Inventor: Francis, Paul, 67663 Kaiserslautern (DE); Probst Eide, Sebastian, 13088 Berlin (DE); Bauer, Felix, 13088 Berlin (DE); Kretschmer, Matthias, 53757 Sankt Augustin (DE); Berneanu, Cristian Daniel, 032115 Bucharest (RO)
(74) Representative: Bach, Alexander

(57) **Abstract**

A cloak server is used to analyze and control disclosure of user data by authenticating at least one of a user, an at least one client associated with the user, a source, a sink, and a third party. The cloak server receives user data transmitted by at least one of the at least one client and a source and associates the received user data with the user. The cloak server stores, seals, and unseals the received user data and is hardened such that the stored user data is not readable from outside the cloak server. The cloak server further generates, based at least in part on a first permissions indicator, a result by executing a computation on the stored user data, and transmits, based at least in part on a second permissions indicator, the result to at least one of the at least one client, and a sink.

## Description

### FIELD OF THE INVENTION

The present invention relates to query-based analytics of data about people or devices associated with people (users). Particular embodiments relate to enabling queries, while controlling disclosure of individual user data, so as to substantially reduce a risk of individual user data being exposed or being used for purposes other than for which the data was gathered.

### BACKGROUND OF THE INVENTION

Many analytics systems store data about users, run computations over that data, and provide answers specific to individual users based on those computations. For instance, a recommendation system stores and analyzes data about many users, and provides recommendations for individual users. As another example, a fraud detection system likewise stores and analyzes data about many users, and provides estimates regarding the likelihood that a given user is fraudulent. In the case of recommendation systems, the system output is normally provided to the user himself. In the case of fraud systems, the system output may be provided to a different recipient (i.e. the service provider).

While these analytics systems are very useful, current systems represent a privacy risk for users, as well as an economic risk to business. There are several privacy risks for users. For instance, an individual working for the operating organization may access the stored data to learn about specific individuals for personal gain. The operating organization may decide to sell the raw data to another organization without permission from users. The operating organization may decide to use the data for purposes other than that expected by the user. For instance, an organization collecting user data for the purpose of making recommendations to those users may later decide to user that data for fraud detection, to the detriment of the individual users. Finally, the organization operating the analytics system may provide inadequate data protection, allowing a hacker to obtain the data.

There are risks to businesses as well. For instance, a number of businesses may wish to combine their user data together to improve the system analytics. Towards this end, the businesses may each transmit their data to each other. However, the other businesses may not protect the data adequately. Each business may also be concerned that the other businesses may exploit their data for business advantages.

Given these shortcomings, there is a need for an analytics system that allows for controlled disclosure of answers based on individual user data, while substantially reducing the risk of user data being exposed or being used for purposes other than for which the data was gathered.

### SUMMARY OF THE INVENTION

Accordingly, aspects of the present invention provide a method for controlling disclosure of user information/data in response to targeted queries. The method includes operating in a cloaked system, authenticating a source of a targeted query, and controlling the user information used to form a response, according to permissions established by the user(s) or sources who provided the user information, or by authorized third parties.

Also, aspects of the invention provide an apparatus that is configured to respond to targeted queries based on user information. The apparatus includes a cloak that authenticates queries and controls disclosure of user data by anonymously aggregating data to calculate responses.

These and other objects, features and advantages of the present invention will become apparent in light of the detailed description thereof, as illustrated in the accompanying drawings.

### BRIEF DESCRIPTION OF THE DRAWINGS

FIG. 1 shows in schematic view an analytics system according to an embodiment of the invention.
FIG. 2 shows in schematic view a cloak component of the analytics system shown in FIG. 1.
FIG. 3 shows in schematic view a process for a user to access the user's own data record within the cloak shown in FIG. 2.
FIG. 4 shows in schematic view a process performed within the cloak shown in FIG. 2 for accepting a client connection to a user data record created by the same client.
FIG. 5 shows in schematic view a user data record updated and user-authenticated for access by plural clients.
FIG. 6 shows in schematic view a process performed within the cloak shown in FIG. 2 for using user identity data to discover plural clients owned by a same user.
FIG. 7 shows in schematic view a user data record containing user identity data, updated and client-authenticated for access by plural clients.
FIG. 8 shows in schematic view a user data record updated and authenticated for access by plural data source/sinks.
FIG. 9 shows in schematic view a user data record authenticated for access by plural data sinks.
FIG. 10 shows in schematic view a system storing third party authentication information as well as lists of third parties approved to view data corresponding to individual users.

### DETAILED DESCRIPTION OF PREFERRED EMBODIMENT

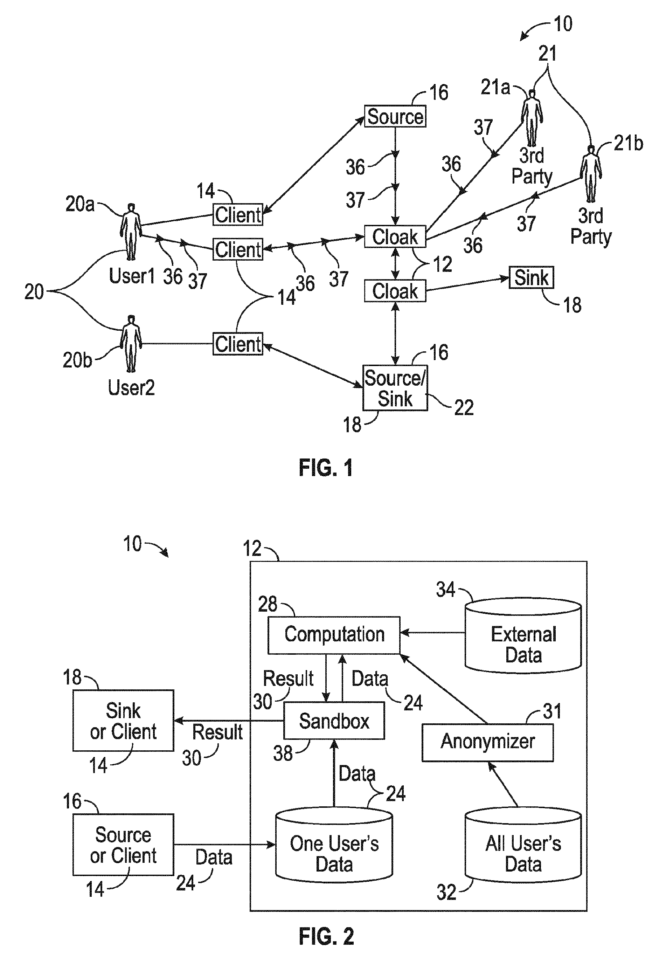

Referring to FIGS. 1 and 2, an analytics system 10 according to an embodiment is shown. The system 10 comprises the following components: a cloak 12, a client 14, a source 16, and a sink 18. The cloak 12 holds user data 24, and transmits to clients 14 and sinks 18 the results of computations 28 over user data 24. User data 24 may be data about users (i.e. age, gender, or heartbeat rate), and may be data about devices associated with users (car location, or smart-watch movement). The client 14 (a user's 20 device) holds user data 24 and transmits it to a cloak 12. Clients 14 can receive results 30 computed from their own user data 24. The client 14 may interact with the user 20a, which, in turn, may be associated with more than one client 14. The source 16 is a system that holds user data 24, but is controlled by a party (not shown) other than the user 20a. As shown by reference numeral 22, a source 16 may also be a sink 18, which is a system that receives results 30 of computations on a user's 20a data 24 but is controlled by a party (not shown) other than the user 20a. A sink 18 may also be a source 16, but does not have to be a source 16. One or more third parties 21 may access and/or provide authorizations to the cloak 12.

The cloak 12 is a hardened system/server such that user data 24 stored within the cloak 12 and is not readable from outside the cloak 12, except via the computation 28 and transmission described herein. When stored on disk within the cloak 12, the user data 24 is encrypted, and the encryption key is sealed, where the sealing function is that defined by trusted computing (for instance, by the Trusted Computing Group TPM specifications). The disk encryption key cannot be unsealed unless a trusted auditor approves the cloak 12 software. Additionally, the cloak 12 provides for remote attestation to prove the origin and content of software in the cloak 12. Data transfers between clients 14 and the cloak 12, and between cloaks 12, are encrypted. In select embodiments of the invention, hardening, sealing, attestation, and/or encryption can, for example, be accomplished as described in commonly owned and co-pending U.S. Pat. App. Nos. 14/283,383 and 61/882,321, which are incorporated herein by reference in their entirety; however, equivalent or alternative modes for hardening, sealing, attestation, or encryption can equally be useful.

User data 24 arrives at a cloak 12 from a client 14 or a source 16. The cloak 12 uses some or all of a user's 20a data 24 as input to a computation 28. This computation 28 may have other inputs, including by way of example, data 34 not related to individual users 20a (including "generic data," "aggregate data," and "systemic data") that is received from external systems (not shown); as well as data related to other individual users 20b, either from within the cloak 12 or from an external system (not shown). When received from within the cloak, or from within a separate interconnected cloak, data related to other individual users 20b is only available via an anonymizing function 31.

The computation 28 produces a result 30. This result 30 may directly contain some of the user data 24, and may also contain other information. The result 30 is transmitted to a client 14 or sink 18.

For example, if the system 10 is making movie recommendations, then the user data 24 might be the movies the user 20a has purchased and ratings the user 20a has given. The database 32 of other users 20b may contain the same. The external data 34 may be parameters used by the computation 28. The output/result 30 is a list of movies being recommended to the user 20a.

To access other users' 20b data 32, the computation 28 may query a cloaked analytics system 12 as previously described. This cloaked analytics system 12 may be in different devices, or may reside in the same device in which the computation 28 is operating. The computation 28 may be operated in a sandbox 38. This sandbox 38 limits the computation 28 to directly accessing a single user's 20 data 24 at a time. The sandbox 38 may also limit which subset of the user data 24 it may access as required by a first permissions indicator 36. The first permissions indicator 36 may also indicate which computations 28 may or may not be executed over the user data 24. In certain embodiments, the first permissions indictor 36 may be a single permissions credential or a set of multiple permissions credentials. The sandbox 38 also ensures that the result 30 of the computation 28 goes only to the correct client 14, or to an approved sink 18 as required by a second permissions indicator 37. The second permissions indicator 37 may be a single permissions credential or a set of multiple permissions credentials. The sandbox 38 needs to be part of the measured code base for attestation, but the computation 28 does not need to be part of the measured code base. The computation 28 may be inserted from an external system (not shown), and operated under control of the sandbox 38.

In one embodiment, shown generally in FIGS. 1-3, at block 40, a user 20a interacts via a user device/client 14 with a service operated at the cloak 12. The user 20a may interact through an application (not shown) running on the device 14 the user 20a is using. An example of such an application (not shown) is a browser. In this scenario, at block 42 the cloak 12 authenticates the user 20a when the user 20a accesses the cloak 12. At blocks 44 and 48, data 24 received from the user's 20a device 14, after authentication, is stored in a record 70 associated with the user 20a. Computations 28 made over the user's 20a data 24 and other data 32 and 34 may only be transmitted, as shown by blocks 50 and 52, over a connection where the user 20a has authenticated.

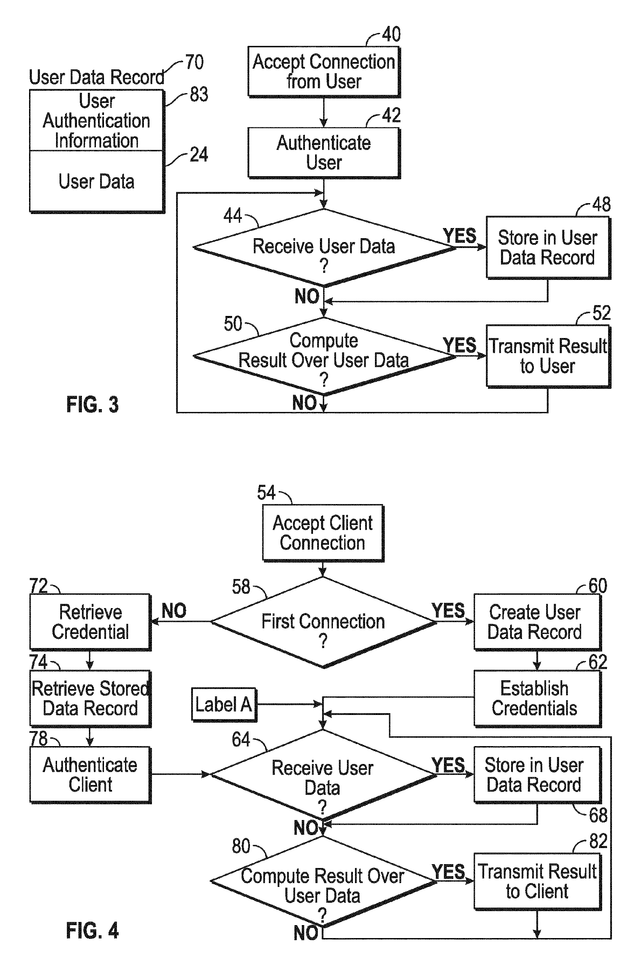

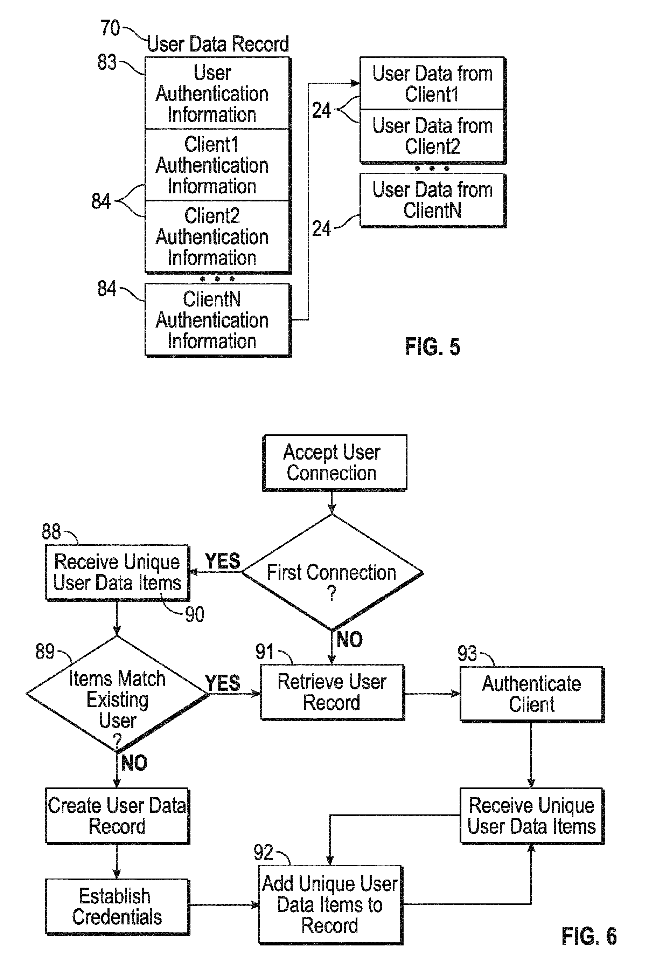

The cloak 12 may authenticate the user 20a through a standard user name/password/user authentication credentials (shown as 83 in FIGS. 3 and 5) method. Alternatively, the cloak 12 may authenticate the user 20a by transmitting a one-time nonce (large random number) to the user 20a via a communications channel (not shown) previously specified by the user 20a, and stored along with the user data record 70. Examples of such channels (not shown) include a SMS number or email address. The user 20a then enters the nonce into the device 14 on which the user 20a is being authenticated. Alternatively, any other known user authentication method may be used.

The user 20a may input data to the cloak 12 through the application (not shown). Alternatively, in certain embodiments, the application (not shown) may automatically gather data 24 from the user's 20a device 14, and transmit this to the cloak 12. Additionally, as shown at block 50 the user 20a or application (not shown) may transmit the first indicator 36 to the cloak 12 to indicate which computations 28 may be executed over the user data 24, or, conversely, which may not.

FIGS. 1-2 and 4 illustrate another embodiment, wherein the cloak 12 receives user data 24 from a single client 14, and returns a computation 28 result 30 to the same client 14 based on that same user data 24. This scenario may be used when, for instance, the client 14 is a device only accessible by authorized users 20a such as a smart phone or laptop computer. In this case, transmitting data 24 and results 30 from the client 14 to the cloak 12 and back only to the same client 14 does not risk privacy loss for the user 20a. The user 20a may or may not be aware that the client 14 is interacting with the cloak 12. For this operation, the cloak 12 must authenticate the client 14 both for receiving data 24 and sending results 30, so that one user's 20a data 24 is not leaked to another user 20b at a different client 14. To do this, the following steps may be taken at the cloak 12.

As shown by blocks 54 and 58, when a client 14 or source 16 attaches to the cloak server 12, the cloak server 12 asks the client 14 or source 16 if it has an authentication credential (shown as 84 in FIGS. 5 and 7-8).

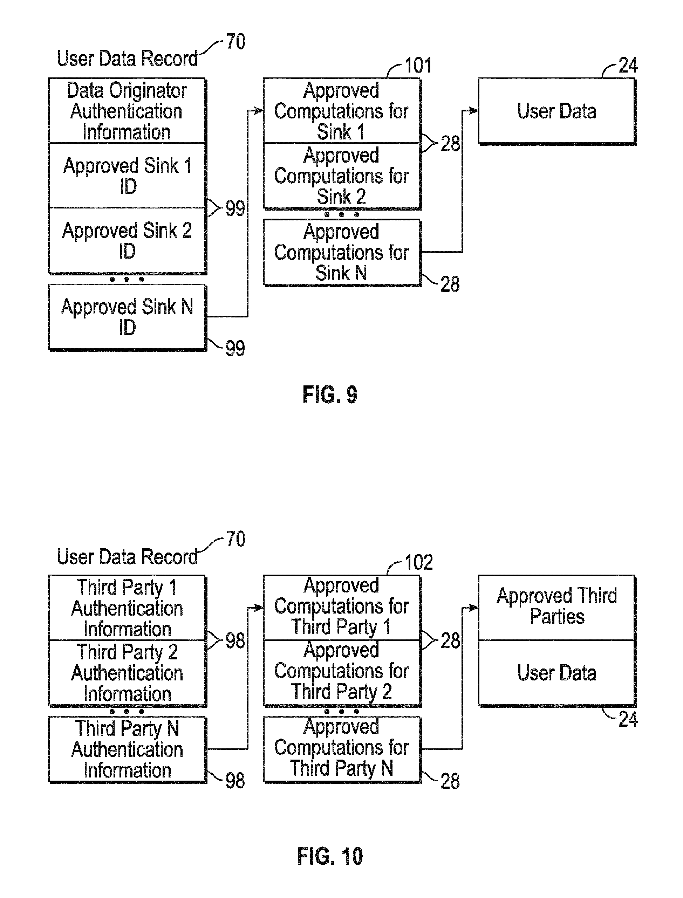

As depicted by blocks 60 and 62, if the client 14 does not have an authentication credential (shown as 84 in FIGs. 5 and 7-8), the cloak 12 creates the credential (shown as 84 in FIGS. 5 and 7-8) for the client 14, a data record (reference number 70 in FIGS. 3, 5 and 7-10) for the client 14, and stores the credential (shown as 84 in FIGS. 5 and 7-8) in the data record (shown as 70 in FIGS. 3, 5 and 7-10). Alternatively, the cloak 12 may ask the client 14 to create its own credential (shown as 84 in FIGS. 5 and 7-8), and convey that credential (shown as 84 in FIGS. 5 and 7-8) to the cloak 12.

Referring to blocks 72, 74 and 78, if the client 14 already has a credential (84 in FIGS. 5 and 7-8), the cloak 12 obtains the credential (shown as 84 in FIGS. 5 and 7-8), retrieves the user's 20a data record (70 in FIGS. 3, 5 and 7-10), and authenticates the client 14 with the retrieved credential (shown as 84 in FIGS. 5 and 7-8).

As referenced by blocks 64 and 68, if the client 14 sends data 24, the cloak 12 stores the data 24 in the data record (shown as 70 in FIGS. 3, 5 and 7-10). The cloak 12 may run/execute a computation 28 if necessary and transmit the result 30, or any previously computed results 30, to the client 14.

There are a number of well-known ways to implement the authentication. For instance, in certain embodiments, the authentication may be based on a symmetric key and key identifier (ID), a public key, a password and client ID, or a nonce.

The computation 28 calculated/executed at block 80 may be requested by the user 20a. It may be requested by the client 14 without the user's 20a involvement. It may also be triggered by the cloak 12. Additionally, the user 20a or client 14 may transmit the first permissions indicator 36 to indicate which computations 28 may or may not be executed over the user data 24.

Referring to FIGS. 1-2 and 5, a user 20a may use multiple devices/clients 14, for instance a smart phone, a tablet, and a laptop. Data 24 received from any of these devices 14 may pertain to the same user 20a, and should be associated with the same user 20a in the cloak 12. Results 30 from computations 28 over that data 24 may be transmitted to any of the devices 14 without loss of privacy for that user 20a, provided that the user 20a controls access to the devices 14. Additionally, the user 20a or clients 14 may transmit the first permissions indicator 36 to indicate which computations 28 may be executed over the user data 24, or, conversely, which may not.

For each device 14 associated with a user 20a, the cloak 12 maintains authentication credentials 84 as described above, and verifies the device's 14 credentials 84 as described above. The credentials 84 may be different for each device 14. Each such credential 84 is associated with the same user data record 70.

In order to learn which user 20 each device 14 is associated with, the cloak 12 may use user authentication credentials 83 as described above. In this case, the cloak 12 associates the user authentication information 83 (for instance user name and password) with the user record 70. When the user 20a authenticates with the cloak 12, the cloak 12 may then establish device credentials 84 with the device 14 as described above, and associate the credentials 84 with the corresponding user record 70.

In some scenarios, the user 20a may not authenticate with the cloak 12, and may even be unaware that the device 14 is interacting with the cloak 12. In this case, the cloak 12 must associate the user 20a with the device 14 without the user's 20a assistance.

Referring to FIGS. 1-2 and 6, as shown by blocks 88-89 and 91-92, one method for matching users 20 to clients 14 is for the client 14 to provide the cloak 12 some data 90 that is: 1) unique to the user 20a; and 2) can be found on multiple clients 14. The client 14 can then send this user-unique data 90, or a one-way hash of this data 90, to the cloak 12. As shown by block 92, the cloak 12 then stores the user-unique data 90 or data hash in a record associated with the client 14. If the cloak 12 receives the same user-unique data 90 or data hash from another client 14, the cloak 12 creates an association between the two data records.

Referring to FIGS. 1-2 and 7, alternatively, a merged record 94 may be created by the cloak 12 from two data records 70 that share unique user data 90 or a data hash. Within this merged record 94, however, the cloak 12 may continue to record which data 24 was received from which client 14. The cloak 12 may require that several matching pieces of user-unique data 90, or several matching hashes, be received from each device 14 before an association is created between the clients 14. This ensures with higher probability that the devices 14 indeed are used by the same user 20a. The cloak 12 may not require, however, that all distinct pieces of user-unique data 90 or data hash are found on all clients 14.

There are many possible sources of user-unique data 90 that may be found on multiple devices 14. One source is the combination of user login name, password, and service name, where service name can be for instance a website name or the service name transmitted on the login web page. The combination of user login name, password, and service name is unique. There are a number of ways that a login name and password may be detected, for instance key logging, or observing the login information in a URL (i.e. HTTP GET) or web form (i.e. HTTP PUT or POST) before the web form is encrypted. Alternatively, only user login name and password may be used. The combination of user login name and password is unique to a given user 20 with high probability. Other user-unique data 90 include, by way of example: a credit-card number, or a credit-card number combined with the card-holder's name or the security code from the back of the credit card; the combination of the user's 20a name and home address; the user's 20a email address; the cookies received from websites and stored by the browser, possibly combined with the name of the cookie source (i.e. the website name); or any string transmitted from a website to the user on the webpage itself which is likely to be unique, or unique in combination with the website name or service name. Specific examples of the latter include an account number or a product purchase number.

Geo-location data about users 20 is another possible form of unique user data 90. Geo-location may be obtained from different devices (i.e. a smart-phone and a GPS-enabled car). Alternatively, geo-location data may be obtained from the same device, but by different sources. For instance, a WIFI geo-location system might record user location in a store, while the mobile service provide might record user location from cell towers. A relatively small number of geo-location samples (location and time) can uniquely distinguish a user from all others. A cloak 12 may compare geo-location data from two user records 70 and determine that they belong to the same user 20a if enough geo-location samples match.

To obtain user-unique data 90 transmitted from a website or service to the client 14, the client 14 may wait until such information is transmitted due to an interaction between the user 20a and the website or service. Alternatively, the client 14 may autonomously initiate the transmission of such user-unique data 90 without the user's 20a cooperation, for instance by requesting the service's account setup page or listing of previously purchased products after the user 20a has logged into the service.

To ensure the validity of user-unique data 90 transmitted by a website or service, the client 14 may first check that a successful website or service authentication has taken place. One way to do this is to check that the browser has verified the website or service certificates. Another is for the client 14 to verify the signatures on the certificates itself.

Referring to FIGS. 1-2 and 8, data 24, 32 and 34 may be maintained in the cloak 12 under a scenario in which a source/sink 22 has collected data 24 about multiple users 20, and conveys this data 24 to the cloak 12. Each user record 70 transmitted by the source/sink 22 has an identifier 96 that distinguishes it from other users 20. This identifier 96 may be a number or string generated by the source 18 that has no association with user data 24. The identifier 96 may also be a number or string associated with user data 24, such as a name, address, account number, or a hash of such a number or string. Each user's 20 data 24 is stored in a record 70 associated with that user 20 through the identifier 96. Each such record 70 is also associated with the source/sink 22, for instance by storing the authentication credentials 84 associated with the source/sink 22.

The cloak 12 authenticates the source/sink 22 before receiving data 24. Computation 28 results 30 for data 24 received from a given source/sink 22 may only be transmitted to the same source/sink 22, as determined by the authentication information / credentials 84. Authentication may take place through known methods, such as name/password or public key authenticated with SSL.

A cloak 12 may receive data 24 corresponding to the same user 20a from multiple source/sinks 22. The cloak 12 may recognize the data 24 as belonging to the same user 20a because each source/sink 22 uses the same unique identifier 96 for the same user 20a. The cloak 12 may store all of the received data 24 in the same data record 70 associated with the user 20a. The cloak 12 may associate each piece of received data 24 with the source/sink 22 from which the data 24 was received by associating the received data 24 with a unique source identifier 97. The cloak 12 may ensure that a computation 28 result 30 sent to a given source/sink 22 only used data 24 from that source/sink 22. Additionally, the source/sink 22 may transmit the first permissions indicator 36 to the cloak 12 to indicate, for each user 20, which computations 28 may be executed over that user's 20 data 24, or, conversely, which may not.

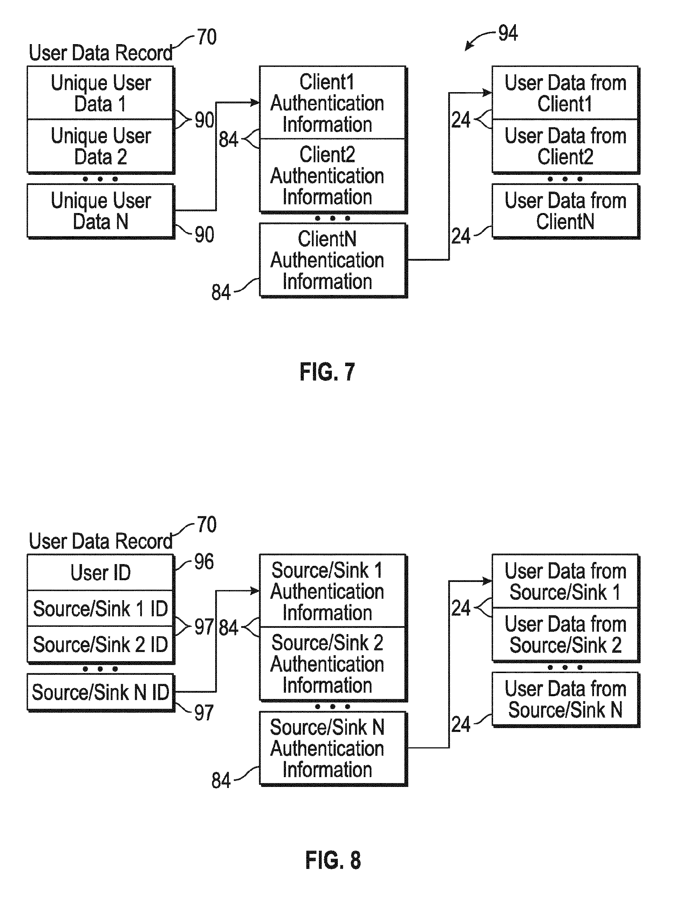

Referring to FIGS. 1-2 and 9, it may be desirable that a data originator (which may be a source 16, user 20, or client 14) transmits user data 24 to a cloak 12, and the cloak 12 may transmit computation 28 results 30 for a given user 20a to a sink 18 which is different from the originator 14, 16, 20. The originator 14, 16, 20 may transmit the second permissions indicator 37 to the cloak that includes an approved sink indicator 99 to indicate which sinks 18 may receive computation 28 results 30, for instance, by providing the name of the sink 18, 99, or by providing the authentication credentials (shown as 84 in FIG. 8) of the sink 18. If the originator 14, 16, 20 is a source 16 transmitting data 24 for multiple users 20, it may provide this sink indication 99 once for all users 20, or may provide this sink indication 99 individually for each user 20. Additionally, the data originator 16, 20, 14 may transmit to the cloak 12 the first permissions indicator 36 that indicates a set of approved computations 101, for each user 20, which computations 28 may be executed over that user's 20 data 24, or, conversely, which may not.

The cloak 12 authenticates the data originator 16, 20 and 14 before receiving data 24. The cloak 12 associates the indicated sinks 18, 99 with each user record 70. The cloak 12 authenticates the sink 18, 99 before transmitting computation 28 results 30. The cloak 12 ensures that only sinks 18, 99 indicated by the second permissions indicator 37 transmitted to the cloak 12 by the data originator 16, 20 and 14 of a given user's 20 data 24 may receive a computation 28 result 30 based on that user's 20 data 30.

In another scenario, a data originator (which may be a source 16, user 20, or client 14) transmits user data 24 to a cloak 12, and the cloak 12 then transmits computation 28 results 30 for a given user 20a to a sink 18 which is different from the originator 14, 16, 20. However, the originator 14, 16, 20 does not indicate the sink 18. Rather, one or more third parties 21 transmits the first 36 and/or second 37 permission indicators to the cloak 12 to identify both the users 20, the computation 28, and the sink 18. This scenario may be used, for instance, in a court-authorized legal request for data 24 for a given user 20a.

Referring to FIGS. 1-2 and 10, in certain embodiments, a different data structure may be useful for implementing the above scenario, in which the cloak 12 stores authentication credentials 98 for the third parties 21. The cloak 12 also stores a set of rules (not shown) about which third party authorizations are needed or allowed for any given user 20. A second set 102 of rules for each user 20 may also indicate which operations are allowed on that user's 20 data 24. Collectively, then, the rules may specify for each combination of user 20 and authorized third parties 21 a set 102 of allowable computations, which may be an empty set.

The third parties 21 may submit a document (including the first 36 and second 37 permissions indicators) stating the identity of the user 20a, the identity of the sink 18, and the computations 28 that should take place. Alternatively, one third party 21a may submit such a document (the first 36 and second 37 permissions indicators), and the remaining required third parties 21b submit a reference (not shown) to that document (not shown), for instance the document's unique identifier (not shown), or a hash of the document. The cloak 12 authorizes each of the third parties 21 with a known technique, for instance name/password or public key authenticated with SSL. If the authentications succeed, and the rules allow it, the cloak 12 may run the computation 28 over the user's 20a data 24, and transmit the results 30 to the sink 18.

As an example, the rules may require that four separate organizations approve the release of the result 30. For instance, the four separate organizations may be: 1) the agency requesting to see the computation result 30; 2) a court authorizing that request; 3) an independent lawyer checking the validity of the court authorization; and 4) the cloak 12 operator.

Referring back to FIGS. 1-2, 5 and 7, in another embodiment, using data record structures 70, a source 16 collects data 24 about multiple users 20 and then transmits that data 24 to a cloak 12. For each given user 20a, the cloak 12 may transmit a computation result 30 to the user 20a. To ensure that the correct user 20a receives the results 30, the source 16 may transmit to the cloak 12 the second permissions indicator 37 that supplies user authorization credentials 83 for each user 20 to the cloak 12. The cloak 12 may subsequently use these credentials 83 to authenticate the user 20a before forwarding results 30 to the user 20a.

One method is for the source 16 to transmit a user name and password, or password hash, to the cloak 12. The cloak 12 uses this to authenticate the user 20a when the user 20a accesses some service at the cloak 12. Alternatively, the source 16 may specify a communications channel (not shown) to the user 20a, such as a SMS number or email address. The cloak 12 may then transmit a nonce over the communications channel (not shown), and require that the client 14 input the nonce during authentication.

Alternatively, the source 16 may supply the user identity associated with a 3^{rd} party authentication service, for instance as standardized by OpenID. In this case, the cloak 12 and user 20a together operate the protocol of the 3^{rd} party authentication service, which informs the cloak 12 if authentication was successful or not.

Alternatively, the cloak 12 may bridge the user authentication back to the source 16. In this case, the cloak 12 establishes an authenticated communications channel (not shown) with the source 16. The authentication exchange between user 20a and source 16 is transmitted via the cloak 12. The cloak 12 does not record or reveal the details of the exchange. At the end of the exchange, the source 16 indicates to the cloak 12 whether authentication succeeded or failed.

## Claims

1. A cloak server for analyzing and controlling disclosure of user data comprising:
a processor adapted, by an application stored in an at least one memory device, to:
authenticate at least one of a user, a first client associated with the user, a first source, and a sink;
receive user data transmitted by at least one of the first client and the first source;
associate the received user data with the user;
store the received user data in the at least one memory device;
generate a result by executing a computation on the stored user data; and
transmit the result to at least one of the first client, the first source and the sink,
wherein the cloak server is hardened such that the stored user data is not readable from outside the cloak server and from the at least one memory device.

2. The cloak server for analyzing and controlling disclosure of user data of claim 1, wherein the result is generated based at least in part on a first permissions indicator provided to the cloak server by at least one of the user, the first client, the first source, the sink, and an authenticated and authorized third party.

3. The cloak server for analyzing and controlling disclosure of user data of claim 2, wherein the first permissions indicator indicates at least one of the user data to be used in the computation, and the computation.

4. The cloak server for analyzing and controlling disclosure of user data of claim 1, wherein the result is transmitted based at least in part on a second permissions indicator provided to the cloak server by at least one of the user, the first client, the first source, and an authenticated third party.

5. The cloak server for analyzing and controlling disclosure of user data of claim 4, wherein the second permission indicator indicates the sink.

6. The cloak server for analyzing and controlling disclosure of user data of claim 1, wherein the first client collects user data by at least one of explicitly interacting with the user, and automatically gathering the user data from the user based on the normal activity of the user.

7. The cloak server for analyzing and controlling disclosure of user data of claim 1, wherein the cloak server receives some of the user data from at least one of a second client and a second source,
wherein the cloak server associates the user data received from the at least one of the first client and the first source and the user data received from the at least one of the second client and the second source with the user based at least in part on one of user authentication credentials, client authentication credentials, an user-unique data, and an user-unique identifier.

8. The cloak server for analyzing and controlling disclosure of user data of claim 1, wherein the cloak server executes the computation on anonymized external data.

9. The cloak server for analyzing and controlling disclosure of user data of claim 1, wherein the cloak server seals and unseals the stored user data.

10. A method for analyzing and controlling disclosure of user data, the method comprising:
authenticating, at a cloak server, at least one of a user, a first client associated with the user, a first source, and a sink;
receiving, at the cloak server, user data transmitted by at least one of the first client, and the first source;
associating, at the cloak server, the received user data with the user;
storing, at the cloak server, the received user data in an at least one memory device;
generating, at the cloak server, a result by executing a computation on the stored user data; and
transmitting, by the cloak server, the result to at least one of the first client, the first source, and the sink,
wherein the cloak server is hardened such that the stored user data is not readable from outside the cloak server and the at least one memory device.

11. The method for analyzing and controlling disclosure of user data of claim 10, wherein the result is generated based at least in part on a first permissions indicator provided to the cloak server by at least one of the user, the first client, the first source, the sink, and an authenticated and authorized third party.

12. The method for analyzing and controlling disclosure of user data of claim 11, wherein the first permissions indicator indicates at least one of the user data to be used in the computation, and the computation.

13. The method for analyzing and controlling disclosure of user data of claim 10, wherein the result is transmitted based at least in part on a second permissions indicator provided to the cloak server by at least one of the user, the first client, the first source, and an authenticated third party.

14. The method for analyzing and controlling disclosure of user data of claim 13, wherein the second permission indictor indicates the sink.

15. The method for analyzing and controlling disclosure of user data of claim 10, wherein the first client collects user data by at least one of explicitly interacting with the user, and automatically gathering the user data from the user based on the normal activity of the user.

16. The method for analyzing and controlling disclosure of user data of claim 10, further comprising:
receiving some of the user data from at least one of a second client and a second source,
wherein associating, at the cloak server, the received user data with the user comprises associating the user data received from the at least one of the first client and the first source and the user data received from the at least one of the second client and the second source with the user based at least in part on one of user authentication credentials, client authentication credentials, an user-unique data, and an user-unique identifier.

17. The method for analyzing and controlling disclosure of user data of claim 10, wherein the computation is executed on anonymized external data.

18. The method for analyzing and controlling disclosure of user data of claim 10, further comprising:
sealing, at the cloak server, the stored user data; and
unsealing, at the cloak server, the stored user data.

19. A method for analyzing and controlling disclosure of user data, the method comprising:
authenticating, by at least one of a source and sink, to a cloak server that includes an at least one memory device;
receiving, at at least one of the source and the sink from the cloak server, a result generated at the cloak server by executing a computation on user data stored in the at least one memory device,
wherein the cloak server is hardened such that the stored user data is not readable from outside the cloak server and the at least one memory device.

20. The method for analyzing and controlling disclosure of user data of claim 19, wherein the result is generated based at least in part on a first permissions indicator provided to the cloak server by at least one of a user, a client, the source, the sink, and an authenticated and authorized third party.
